# EUROPEAN PATENT SPECIFICATION

(11) **EP 1 357 697 B1**
(45) Date of publication and mention of the grant of the patent: **24.05.2006**
(21) Application number: 02079287.5
(22) Date of filing: 17.10.2002
(51) Int. Cl.: H04L 9/30

(54) **Secure communication via the internet**
Sichere Kommunikation über das Internet
Communication sécurisée via l'Internet

(30) Priority: 16.04.2002 EP 02076498
(43) Date of publication of application: 29.10.2003
(73) Proprietor: Izecom B.V., 1018 MR Amsterdam (NL)
(72) Inventor: Karman, Christine, 1273 XJ HUIZEN (NL)
(74) Representative: Hoekstra, Jelle

(56) References cited:
- EP-A- 1 061 430
- WO-A-01/97440
- US-A- 6 023 507
- US-A1- 2001 042 045
- MENEZES, VANSTONE, OORSCHOT: "Handbook of Applied Cryptography" 1997 , CRC PRESS LLC , USA XP002245335 * page 27 - page 30 * * page 491 - page 492 * * page 570 - page 574 * * page 547 - page 550 *

## Description

### Field of the invention

The invention relates to secure electronic communication via a communication system, in particular the Internet, using public key encryption.

### Background of the invention

Electronic communication has spread widely with the success of Internet and is spreading even further with the arrival of all kinds of wireless communication, for instance using PDAs (Personal Digital Assistants) and mobile phones. Electronic communication can take many forms, such as email, file transport, accessing web sites, etc. Normally, electronic communication is unprotected in the sense that the electronic content can be accessed by many people that have access to the computers involved in the distribution of the electronic content. As an example, sending an email usually involves the sending and receiving computer, access computers that provide both station access to the network, and several routing computers involved in routing the email through the Internet. Even one route may involve a dozen routers, where for each communication different routers may be chosen. Consequently, tens of thousands of operators of all those computers can access electronically exchanged content. Although the operators may be bound by contract or law not to disclose such content, it can never be ruled out that somebody may not be able to resist the temptation. A serious threat to security is also that malicious people may break into ("hack") one or more of these computers and in that way get access to the electronic content.

It is therefore desired to secure electronic communication. This may involve encrypting the digital content and in that way making it unreadable for a person that does not have access to the decryption key/algorithm. Alternatively, or additionally it may involve authenticating the communication by digitally signing the content. In itself, suitable encryption algorithms and modes of using such algorithms are known. Particularly, public key cryptography has proven very successful as the basis for exchanging keys between the sending and receiving parties. In the Internet community, PGP (Pretty Good Privacy) has been a reasonably successful implementation of public key cryptography.

PGP is a hybrid cryptosystem combining features of both conventional and public key cryptography. When a user encrypts plaintext with PGP, PGP first compresses the plaintext. PGP then creates a random number session key, which is a one-time-only secret key. The session key works with a conventional encryption algorithm to encrypt the plaintext; the result is ciphertext. Once the data is encrypted, the session key is then encrypted to the recipient's public key. This public key-encrypted session key is transmitted along with the ciphertext to the recipient. Decryption works in the reverse. The recipient's copy of PGP uses his or her private key to recover the session key, which PGP then uses to decrypt the conventionally encrypted ciphertext.

PGP also uses public key cryptography as a method for employing digital signatures. Digital signatures let the recipient of information verify the authenticity of the information's origin, and also verify that the information was not altered while in transit. A digital signature also provides non-repudiation, which means that it prevents the sender from claiming that he or she did not actually send the information. Instead of encrypting information using someone else's public key, it is encrypted it with the sender's private key. If the information can be decrypted with the corresponding public key, then it must have originated with the owner of the keys. To improve the speed, PGP uses a one-way hash function in the process. The one-way hash function takes the variable-length message as input and produces a fixed-length, relatively short output, known as a message digest. The hash function ensures that, if the information is changed in any way-even by just one bit-an entirely different output value is produced. Then PGP uses the digest and the private key to create the "signature". PGP transmits the signature and the plaintext together. Upon receipt of the message, the recipient uses PGP to re-compute the digest, thus verifying the signature.

Keys are managed in a distributed way in PGP based on a "web of trust". Every user generates and distributes his own public key. Users sign each other's public keys, creating an interconnected community of PGP users. If a user wants to, he can store his public key in one or more key servers. Digital certificates simplify the task of establishing whether a public key truly belongs to the purported owner. A digital certificate consists of a public key, certificate information ("Identity" information about the user, such as name, user ID, and so on.), and one or more digital signatures. The purpose of the digital signature on a certificate is to state that the certificate information has been attested to by some other person or entity. Certificates are used when it is necessary to exchange public keys with someone else. For small groups of people who wish to communicate securely, it is easy to manually exchange diskettes or emails containing each owner's public key. In addition to manual public key distribution use can be made of storage-only repositories called Certificate Servers, or more structured systems that provide additional key management features and are called Public Key Infrastructures (PKIs). A key server, also called a certificate server or a directory server, is a database that allows users to submit and retrieve digital certificates. A PKI includes the certificate storage facilities of a certificate server, but also provides services and protocols for managing public keys. These include the ability to issue, revoke, and trust certificates. The main feature of a PKI is the introduction of what are known as Certification Authority (CA) and Registration Authority (RA) components. A CA creates certificates and digitally signs them using the CA's private key. Because of its role in creating certificates, the CA is the central component of a PKI. Using the CA's public key, anyone wanting to verify a certificate's authenticity verifies the issuing CA's digital signature, and hence, the integrity of the contents of the certificate (most importantly, the public key and the identity of the certificate holder). A CA is often software that is used to issue the actual certificates to its computer users. Typically, an RA refers to the people, processes, and tools used to support the registration of users with the PKI (enrollment) and ongoing administration of users. The RA may perform vetting-the process of verifying that a public key belongs to its purported owner. An RA is a human entity-a person, group, department, company, or other association.

A user can download from a website or via ftp via the Internet a PGP software program (plug-in) that may be used freely for personal use. The program enables a user to create a private/public key pair. The software makes it also possible for the user to store the public key in a key server in the Internet. The user has to select a key server. If a user wants to send an encrypted communication he first has to retrieve the public key that belongs to the receiver. The sending user may contact the receiver, and the receiver may send its public key to the sender. The sender may also try and search for a key from the several different key servers in the Internet. After having obtaining the public key of the receiver, the user of the sending station can instruct the PGP program to encrypt a communication (email or file) with this public key. The secured communication can then be sent or transferred using standard communication protocols, such as email or ftp. The receiver can use its own private key to decrypt the secured communication. The described PGP software includes several cryptographic protocols based on public key encryption for performing the different types of secure communication.

Despite the availability of (free) cryptographic solutions like PGP, almost all electronic communication for personal use is not secured. Nevertheless, even businesses, such as law firms, accountants and bankers, frequently use ordinary, unsecured email for their business email over the public Internet.

The patent document WO 01/97440 discloses a public key encryption system wherein a sender's computer receives a public key of the receiver from a server. If the server does not have a key for the receiver, if creates a key pair, provides the public key to the sender, notifies the receiver of the fact that it has created a key pair and that a message will be received encrypted with the public key. The receiver can then retrieve the private key from the server.

### Summary of the invention

It is an object of the invention to provide an improved method and system for secure communication between a sending and receiving station.

To meet the object of the invention, the method of enabling secure communication between at least one sending station and at least one receiving station via a communication system, in particular Internet, using public key cryptography includes:
in the sending station, in response to a desire to send a secure electronic communication to the receiving station, indicating such intention to a key server in the communication system;
in the key server verifying whether a public key is available for the receiving station or a user of the receiving station (hereinafter "receiver"); and on a negative outcome of the verification, indicating to the receiver an intention to send a secured communication to the receiver, and enabling the receiving station to obtain software that enables the receiver to create a private/public key pair for the receiver and to make the public key of the receiver available to the key server; and
if the public key was already available to the key server or in response to the public key having been made available by the receiver, using the public key for the receiver to secure the electronic communication; and making the secured communication available to the receiver through the communication system.

The inventor has realized that the low uptake of public key cryptographic solutions is at least partially caused by a user having to fully understand the concept of public key encryption and having to perform many steps in handling the keys. Low uptake is also caused by the impossibility of sending an encrypted message to a person who does not have PGP or another means of decrypting messages. The invention enables the sending of an encrypted message, or a pointer to it, to a person who doesn't have encryption tools. The message, or links in the message, enable automatic or partially automatic (download and) installation of encryption tools on recipients computer, who thereafter can (received and) decrypt and read the message. According to the invention, the key server is not just a passive storage of public keys but is the center piece in all communications involving keys. The client software in the sending station informs the key server that it intends to send an email (or other electronic content) to a receiver. The key server checks whether a public key is available for the receiver. If not, the key server fully automatically undertakes actions to stimulate creation of such a public key. To this end, the key server sends a communication to the receiver informing the receiver that the sender wants to send a secure message. The key server also makes software available to the receiver (e.g. by sending a links to a download server, or by attaching the software). This software is capable of creating a private/public key pair in the receiver and to fully automatically store the public key in the server (e.g. send it via Internet). Preferably, the software is also able to decrypt a received secured communication. In this way, users need not to check the many key servers for a public key of a recipient, need not to distribute their own public keys (and so do also not need to store public keys of others with the risk of using out-of-date keys), need not to inform other users where to download software from and how to use the software to create and store keys.

As defined in the dependent claim 2, the communication of the secure message takes place via a server. In this way, the sending client only needs to have access to the public key of the secure server. This simplifies checking whether the key is still valid. Moreover, the sending client is relieved from having to manage the email in the situation that the receiving client has not yet obtained a key pair. Preferably, the sending client always uses the services of the secure server for delivery of secured content. Alternatively, the sending client may send the email directly to the receiving client encrypted with the public key of the receiving client if this key is available in the key server. If the client sends directly, the secure server is used if no public key of the receiver is available yet. The secure server may be combined with the key server, but may also be separate from it.

As defined in the dependent claim 3, the secure server temporarily stores the secured email until the receiving client has made a public key available to the key server. If desired, the secure server can inform the sending client that no successful secure delivery was possible within a predetermined period (of, for example, one week) if within that period no public key was made available by the receiving client or no delivery of the email was possible.

As defined in the dependent claim 4, when the receiving client makes its public key available to the key server, the secure server can deliver the secured content to the receiver. To this end, the content must be encrypted in such a way that the receiver can decrypt it using its private key.. The secure server can encrypt the message using the public key of the receiver. Since the message is stored in a form encrypted using the server's public key, the message must also be decrypted first using the server's private key.

As defined in the dependent claim 5, the key server plays also an important role for authentication/signing of digital content, such as emails. Software, like a plug-in, is automatically made available to the receiver to enable the receiver to obtain a public key necessary for verifying the authenticated/signed communication.

As defined in the dependent claim 6, the private key of the sender is used for authenticating the communication. The authenticated communication may be sent directly to the receiver. Advantageously, as defined in the dependent claim 7, the sender sends the authenticated message to a secure server (preferably the same one as used for sending encrypted emails). In this way, the sender is relieved from delivery of the message, in particular if the receiver has not yet obtained its public key. The secure server re-authenticates the communication by signing it with its own private key. The newly authenticated communication is made available to the receiver, e.g. by emailing it from the server to the receiver. In this way it is possible that the receiver only has to deal with the public key of the secure server and, as such, is relieved from having to check for other keys and verifying the validity of those keys. For higher security, the signature of the secure server may be added to the signature of the sender, enabling the receiver to verify both signatures.

As defined in the dependent claim 8, the chance of misuse of the system is reduced by verifying that a communication identity of a station that wishes to participate (i.e. store its public key in the key server) is valid. In this way all stations (or users of the stations) that send secured (e.g. encrypted or signed) communications can be traced back. By accepting in a receiver only secured communications (and automatically disregarding all communications that have not been secured) an effective filter against Spam (unsolicited emails) is created. The number of unsolicited communications will be reduced and any unsolicited communications that are received can be traced back to a valid sender. The communication identity that is verified of a sender or receiver can be any suitable verifiable identity, such as a communication address, (e.g. IP address), or personal name/address as long as a verifiable proof of identity is supplied.

As defined in the dependent claim 9, the key server also performs the role of checking that the same cryptographic protocols and, in particular, the same release of those protocols are used. The server automatically takes the initiative to inform the station with the oldest software to upgrade to a newer release. In this way, users do not need to understand which (releases of) cryptographic protocols are used.

As defined in the dependent claim 10, preferably the key server triggers stations to use a latest approved release of the client software, including the cryptographic protocol. In this way, any protocol of which the security has been questioned can be replaced quickly. The users are relieved from having to keep up-to-date with which protocols and which software to use.

As defined in the dependent claim 11, the user can configure/control which communications are secured. The client software can, based on these settings, perform the securing fully automatic for those receivers as once specified by the user (or later on updated by the user).

As defined in the dependent claim 12, the key server or secure server registers when a user (or station of a user) has performed a billable operation. This may, for example, be: retrieving a public key or sending a secured communication. Billing can then be fully automatic, on a subscription basis (postpaid) or on a prepaid basis where the billable amount is subtracted from a prepaid balance.

As defined in the dependent claim 13, a distinction is made between servers. A special server (company server) is designated for dealing with keys (and optionally secure temporary storage of secured communications) for specific stations. Preferably, the company server has access to the Internet through a firewall that shields all the communication for a company. The company server may service one or more of the following:
- all public keys for senders/receivers within the company;
- all public keys for authorized external senders/receivers (e.g. customers) of the company.

These and other aspects of the invention are apparent from and will be elucidated with reference to the embodiments described hereinafter.

### Brief description of the drawings

In the drawings:
Fig. 1 shows an architecture of the system according to the invention;
Fig. 2 shows a flow diagram of operations in the sending client;
Fig. 3 shows a flow diagram of operations in the key server according to the invention; and
Fig. 4 shows a hierarchy of servers according to the invention.

### Detailed description of the preferred embodiment

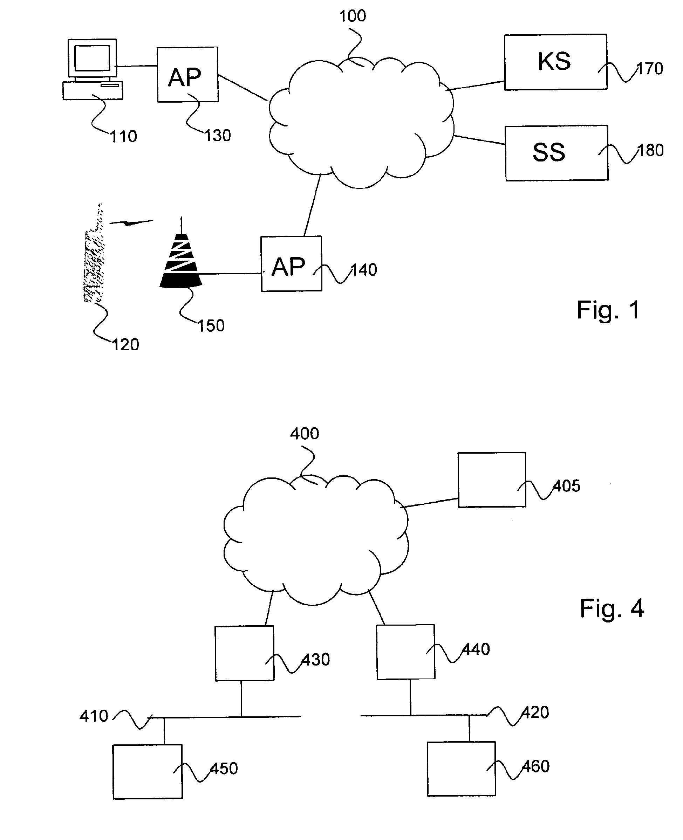

Figure 1 shows an architecture of the system according to the invention. The system includes at least one sending station and one receiving station that can communicate via a communication system. The communication system is preferably, but is not limited to a wide area network. The figure shows a typical architecture where the communication infrastructure is based on Internet. The backbone of Internet is indicated by number 100 and is usually formed by routers and wide area links connecting the routers. Two stations 110 and 120 are shown. In the example, the stations can act both as a sending station and as a receiving station as is usually the case for Internet. The stations 110 and 120 gain access to the Internet 100 via respective access providers 130 and 140. Station 120 is a mobile terminal (e.g. mobile phone or PDA) that communicates with its access provider 140 at least partly via a wireless telecommunications network 150. Station 110 is a conventional stationary terminal, such as a personal computer, that communicates to its access provider 130 via a conventional access network 160, such as a telephone line and telecommunication switches or a cable network (and fixed telecommunication lines). According to the invention, a centralized server 170 plays a role in secure communication between the stations 110 and 120. In short, the server 170 plays the role of:
- key intermediary controlling availability of public keys for the involved devices and acting as a key intermediary between the sender and receiver, particularly when one of the parties has not yet obtained the necessary keys;
- communication intermediary, where the communication between the sender and receiver takes place via the server. The communication between the sender and server is secured using the keys of the sender/server, where appropriate. The communication between the server and receiver is managed by the keys of the server/receiver where appropriate.
- Spam filter: the server only accepts keys from genuine stations, so that all secure communications can be traced back to a genuine station.

The server is preferably implemented on a computer platform, equipped with one or more processors that, suitably programmed, perform the functions according to the invention. The platform is preferably chosen from generally available platforms optimised for Internet functions. The platform includes a background storage, typically implemented on hard disks, such as a RAID system, a main memory, a user interface for enabling operator control and feedback, and any ordinary hardware used in such computer systems, such as I/O interfaces and control logic.

The cryptographic operations that need to be performed in the stations and the server are typically implemented in software. As will be described in more detail below, the stations and the server are equipped with suitable programs to perform the cryptographic operations. Preferably, the software is a plug-in or a set of plug-ins. For example, a plug-in for an email program, such as Outlook, and a plug-in for a file management program, like Explorer. If desired, part or the entire operation may be performed in hardware. The cryptographic algorithms itself are not part of the invention. Any suitable algorithm may be used. Preferably, the protocol suite of PGP is used, also enabling compatible co-operation with stations using the conventional PGP plug-ins. Particular care should be given to the private keys. Preferably, these keys are stored securely. To this end the stations may have access to a secure storage, e.g. in the form of a smart card that can be inserted into the stations or communicate with the stations (e.g. via a wired link like USB or wirelessly). In itself, suitable ways of storing keys are known.

The operation of the system will now be described for encryption of emails and signing of emails, where the signature is an attachment to the email. Persons skilled in the art will be able to apply the principles of the described two cryptographic applications also to other applications, such as signing with message recovery where the original message is not required by the receiver to verify the signature. The principles can also be used for other communications than emails. For instance, files can be protected and transferred via ftp using the same principles.

### Encryption

It is assumed that the sending station is already equipped with all necessary software (and/or hardware) for performing the steps described below. If not, the sending station may download the software from, preferably, the server 170. It is preferred that the software is a plug-in in the email program of the sending station. In this way, the user only needs to perform the normal operations for sending an email with minimal additional steps to be taken for securing the email. The software in the sending station enables the user to send an encrypted email to a receiving station. Preferably the software is configurable by the user. The software may enable the user to indicate that:
- all electronic communication should be encrypted;
- all electronic communication to receivers businesses should be encrypted;
- all electronic communication to selected receivers should be encrypted;
- an individual electronic communication should be encrypted.

The software may decide on whether or not an email is intended for a business receiver based on predetermined rules, such as all email addresses ending with .com. Alternatively, the user may be able to specify specific addresses, or address ranges, for example all addresses within the domain ibm.com. For the emails to selected receivers, the software enables the user to specify individual email addresses. Preferably, whenever the sending station receives an encrypted email, the software allows the user to add the sending email address to the list of selected receivers to which emails should be sent in an encrypted form. Advantageously, the software is able to automatically store such an address in the list, where the user can configure that such an automatic addition should or should not happen.

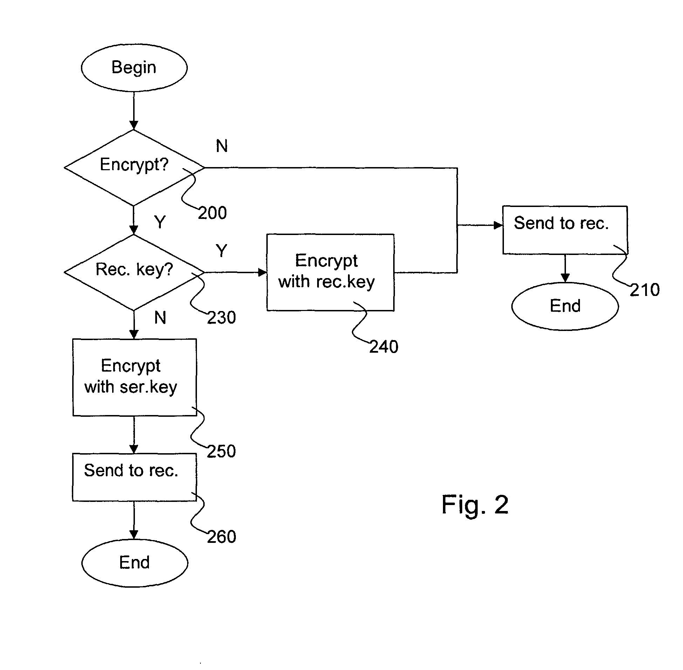

Fig. 2 shows a flow diagram of the steps performed by the sending client. In step 200, it is established whether the email should be encrypted. If not, in step 210 the email is sent to the receiver in the conventional way. If encryption is desired, in step 230 the client checks whether a public key is available for the receiver. The sending station may store public keys for some or all receiving stations it has communicated to in the past. If such a key exists, this key may be used. If no such key is available (or the sending station does not store any public key of other stations), the sending station contacts the server 170 via the Internet. It provides an identification of the receiver to the server 170. This identification may be the name of the receiving user. Alternatively, it may be the email address of the receiving user or internet identification (such as IP address) of the receiving station. It is preferred that the sending client does not store or use stored keys of other clients but that it always contacts the key server. In this way, it can be guaranteed that up-to-date keys (and encryption protocols) are used. If the key is already available in the server, the sending client receives the key from the server and uses it to encrypt the message in step 240. In step 210 the message is then send directly to the receiver. If no such key is (yet) available, the server provides the public key of a secure server. In fig. 1, the secure server is indicated with number 180. The secure server may the same as the key server. In step 250 the sending client uses this key to encrypt the message and sends the message to the secure server in step 260 for further processing.

As described above, the message is encrypted in the sending client before sending it to the recipient or server. Preferably, the encryption occurs just before sending it. In that way, the user can still edit the message until the message is actually sent (or handed over to the email program for transmission). Advantageously, a plaintext form of the message is kept at the sender's computer, where optionally modification of this message is prohibited.

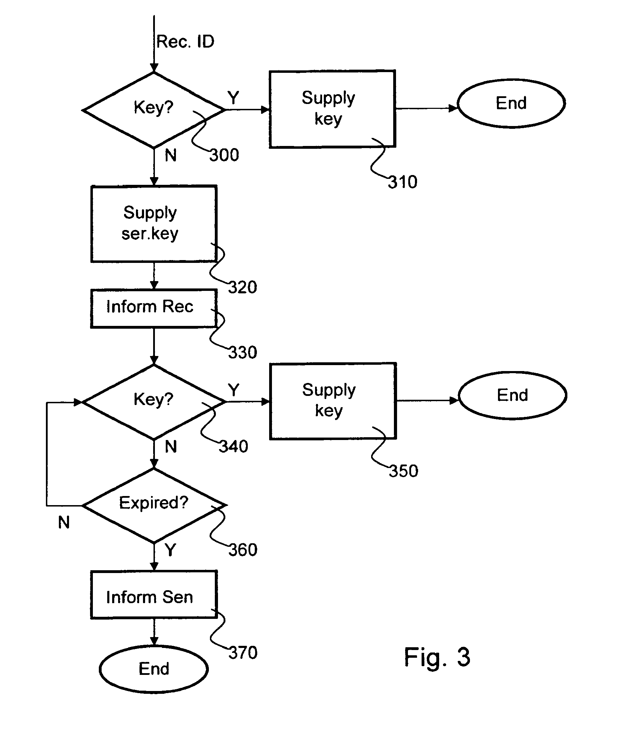

Fig. 3 shows a flow diagram of the steps performed by the key server. In step 300 the key server verifies whether a pubic key of a recipient is already available. The server does this in response to a request from the sender for a public key of a recipient (or an indication that the sender wants to send a secured communication to the recipient). The identification of the recipient is supplied by the sender. If the outcome is positive, the server supplies the public key in step 310. If the outcome is negative, in step 320 the key server supplies a public key of a secure server (that may be the same as the key server). As has been described for Fig. 2, the sender sends the message encrypted with this key to the secure server. In response to receiving such a message, the secure server stores it in encrypted form in a storage. This storing operation is not shown in Fig. 3. The key server also sends to the intended receiver a notification that it is the intention to send an encrypted message to the receiver. The notification may take the form of "you have received an encrypted message from ..." or ".... wants to send an encrypted message to you" followed by a prescription on how to read that message. Preferably, the server sends a message to the recipient similar to: "name@sender.com has sent you an encrypted email message. You need to download a plug in from www.izemail.com in order to read this email message. Please come to www.izemail.com/yourcode to receive the plug-in and read the message. The subject of the message is [subject line]". The prescription involves downloading the crypto software and installing it on the client. The download function may be implemented by a server using Internet's web functionality. The prescription may point the recipient to a webpage on the server for downloading secure email software. After downloading of a plug-in (the initial plug-in may be small, additional modules can be downloaded later), the software is installed. During the installation automatically a private/public key pair is created and the public key is sent to the key server, thus making it crypto-enabled. The receiving client may, after installation, also send an initialization message to the server. In step 340 the key server checks whether already a public key has been supplied by the receiver. If so, in step 350 it provides this public key (or makes it available) to the secure server. In response, the secure server then decrypts the stored original message, encrypts it with the brand new public key of the new user. Since the stored message was encrypted with the public key of the secure server, the message is also decrypted by the secure server with its private key. Using the PGP or other suitable public key based protocols, the secure server will first decrypt the message and then re-encrypt it. In this case, the plain form of the message is preferably not stored in a background storage accessible by human operators. For example, the decryption and re-encryption may be performed in as secure unit, such as a crypto-processor on a smart card or other physically secured unit. Of course, the re-encryption may take place in the key server. In that case, the key server in step 350 performs the re-encryption. The re-encrypted message is sent to the receiver. In response to the public key of the receiver becoming available, the key server may optionally inform the original sending client of the new user, and (securely) transmits the public key to the sender for future use. In the preferred embodiment, the sending client does not store public keys. In that case, the public key does not need to be supplied. Instead, an indication may be supplied to the sender that the receiver has responded and that the message has or will be delivered. If the outcome of step 340 is that no public key has been supplied yet, then the key server may optionally check whether too much time has expired already. This test is shown in step 360. If, for example, a one month response period has not yet expired, the key server remains prepared to ensure that the message is supplied. In the figure this is indicated by returning to step 340. The loop shown represents a waiting loop. It will be appreciated that in an actual implementation this may be done differently, e.g. the server may operate on an 'interrupt' basis, where one of the possible triggers is the receipt of a message from the sender with the public key. As part of the waiting loop, the server may send occasional reminders to the intended receiver, for example, a reminder may be sent every three days. For example, the message to the recipient could be: "name@sender.com has sent you a secure email message on dd mmm yyyy. Please go to www.izemail.com/yourcode to download a plug-in for your email program for reading the message securely". Also regular feedback may be provided to the sender, for example in the form of: name@recipient.com hasn't read your message of dd mmm yyyy yet. We'll keep you informed. If the maximum waiting period has expired, in step 370 the necessary clean-up operations may be performed or triggered by the key server, like informing the sender that the message could not be delivered and removing the stored message from the secure server.

Preferably, some or all messages (other than the encrypted message) are signed to increase confidence of the users of the system according to the invention. Advantageously, to help people understand the process, the server can send the original encrypted message to the recipient that is not yet part of the system, suggesting that "this is an encrypted message which I'll help you decipher, if you download my software". After installation of the software as described above, the message is replaced by the re-encrypted message generated by the server. Technically, the original message can never be decrypted by the user because the user will never get hold of the secret key of the server, needed to decrypt the message. Nevertheless, supplying the message immediately and replacing it at a later stage will help the user in understanding the system and put more pressure on the user to follow the procedure.

In a preferred embodiment, the sending client is not involved in the management of public keys at all. If the sender wants to send an encrypted message to a recipient it simply encrypts it with the public key of a server, sends the encrypted message to the server together with an indication of the intended receiver. So in effect, the sending client performs steps 250 and 260 of Fig. 2. To obtain the public key of the server, the sending client may each time it wishes to submit an encrypted message to the secure server contact the key server to obtain the key. Alternatively, the client may store this single public key and automatically at certain intervals (e.g. every two weeks) perform a test to see if this key is still up-to-date and retrieve an update if this is available. Preferably, the server uses more than one public key, so that each time a new one is selected, the old one may still be used for a limited period. If necessary, the key server can revoke a public key, in particular the key of the secure server. Such an operation may be necessary if the private key of the secure server has been disclosed or is under threat, e.g. by a malevolent employee and for other causes of the server secret key ceasing to be fully secret or usable. In such a case, the server immediately contacts all registered users, for example by sending an email. Alternatively, in response to the sending client contacting the server, the server provides the updated key to the sending client. The sending client then uses this key for encryption. The latter method has the advantage that the user need not be aware of a change of the key and remains confident in using the system.

In a receiving client that does not yet participate in the system at a certain moment a message that secure email is available will be received as described above. If the user chooses to participate the software is installed, preferably as a plug-in of the email program. In the embodiment where the client station keeps public keys of other stations, after the installation or as part of the installation a so-called key ring is built. To this end, the user's address book may be scanned automatically and keys downloaded for users on the contact list. Preferably, such an operation is done in the background, very gradually, not disturbing the normal operation of the computer. If at a later stage a user stores a new email address, the software automatically contacts the key server to retrieve a corresponding key. Once the software has been installed, received email messages are automatically decrypted using its private key and displayed in plain text. Preferably, a small graphic indicates that the message has been encrypted.

In a preferred embodiment, the storage in the key server and/or secure server is based on a database. This simplifies storing the relevant data in a structured way and makes it easier to allow several ways of specifying a user.

### Digital certificate

Preferably, information on a key for a station or user of a station is stored and exchanged in the form of a digital certificate. The digital certificate is a collection of identifying information bound together with a public key and preferably signed by the key server to prove its authenticity. The digital certificate may include (but is not limited to) the following information:
- The version number-this identifies which version of the software and//or protocols was used to create the key associated with the certificate.
- The certificate holder's public key-the public portion of the holder's key pair, together with the algorithm of the key, such as RSA, RSA Legacy, DH (Diffie-Hellman), or DSA (Digital Signature Algorithm).
- The certificate holder's information-this consists of "identity" information about the station or user of the station, such as his or her name, user ID, email address, ICQ number, photograph, and so on.
- The digital signature of the certificate owner-also called a self-signature, this is the signature using the corresponding private key of the public key associated with the certificate.
- The certificate's validity period-the certificate's start date/time and expiration date/time; indicates when the certificate will expire. If the key pair contains subkeys, then this includes the expiration of each of the encryption subkeys as well.
- The preferred symmetric encryption algorithm for the key-indicates the encryption algorithm to which the certificate owner prefers to have information encrypted. Preferred algorithms are CAST, IDEA, Triple-DES, Twofish and Rijndael.

### Digital signatures

A sending station that wishes to authenticate (sign) a communication can use its private key, preferably using the PGP protocols. The signature may be an attachment to the message, where the message is unencrypted. If so desired, the message may also be encrypted. The sending stations may send the signed message directly to the recipient providing the recipient with information on how to obtain the software and keys for verifying the signature through the server. Preferably, the sending station sends the signed message to the secure server together with an indication of the intended recipient. The server then verifies the signature using the public key of the sender. If not correct or the server does not have the public key, the server automatically contacts the sender and enables the sender to obtain a correct key pair or make its public key available to the server. The server may also make updates of the cryptographic protocols available to the sending client. If correct, the server signs the message with its own private key and provides the message to the recipient (e.g. emails the message). In a way similar to as described for the encryption, the server stimulates the receiving client to obtain the public key of the server and to become part of the system by creating a key pair and making its public key available to the server. The server preferably also informs the sender of the progress.

### Spam filter

In the embodiment where secured message are sent directly to a recipient, preferably secured messages (encrypted and/or signed) are automatically stored in mailboxes other then the one(s) used for receiving unsecured communications. The user can choose to ignore unsecured communications. Preferably, the client's software enables the user to configure that unsecured emails are automatically deleted. Optionally, an automatic reply is given to the sender informing the sender that the message has been automatically been deleted and instructing the sender how secured communications can be sent that will be accepted. The instructions can be similar as has been described above. Preferably, the receiver of an unsecured communication informs the key server so that the key server can inform the original sender and manage the process of getting the sender to obtain a key pair and send secure communications.

### Hierarchy of servers

In a simple system it is sufficient to use only one server, that can perform the role of the key server as well as the secure server. The server may be replicated to provide fast access from different areas. Fig. 4 shows a preferred embodiment with a hierarchy of servers. In principle, the hierarchy of servers follows the hierarchy in the Internet with a division between the public part of the Internet 400, and restricted parts, shown are 410 and 420. The restricted parts are typically company specific parts of the Internet, also used for communication within the domain of the company. The restricted parts are preferably connected to the public part via respective firewalls. Shown are the firewalls 430 and 440. Communication in the restricted parts may be established in any suitable way, for example using a mix of locale area and wide area technologies. Server 405 is the public server as described above, in principle designated to service any user/station not serviced by any of the other servers. Preferably, each of the restricted parts of the Internet is serviced by a dedicated server, shown are the servers 450 and 460. This enables companies to enforce an encryption policy from their employees (i.e. for those stations within the company restricted part). This policy can be forced by their own server acting as a key server, policy server, and optionally download server. In this way, companies can ensure that employees send each other encrypted email. Preferably, it is ensured that also any outgoing email (i.e. emails passing through the firewall into or through the public part of the Internet) is encrypted. In a preferred embodiment, the system is configured that clients within a restricted part for any service of a server always contact the server dedicated for the restricted part. If this server can not provide the service (e.g. a public key of a user in the public part of Internet is requested), preferably the server takes care of obtaining such information from the public server 410. Alternatively, the software in the client already decides which server to use. Such a decision could be based on whether the recipient is an employee of the company (for instance judged by the extension of the communication identification or not. The company server 450, 460 preferably services any secure communication for all authorized users in the respective restricted part 410, 420. Additionally, the company server services any secure communication with authorized users outside the restricted part, e.g. users in the public part or another restricted part. As an example, keys of customers or suppliers of a company may be added to the company server. In this way the company has much more control of the secure communication with its customers and suppliers. Particularly in a situation where companies have a close relationship, it is preferred that the company servers of the companies cooperate, for example by regularly synchronizing the databases. In this way, communication between the companies can be kept more secure. In particular, changes in employees that are updated in the database of the company internal server can be made available to key outside companies in a quick and reliable way.

Advantageously, all communication between a station and the server is secured. This may be done by creating a secure connection through the Internet, for example using SSL (secure socket layer). Preferably, all messages to a user of a station are signed by the sending party. This will increase confidence in the system and get a user more acquainted with the concept of digital signatures.

In a preferred embodiment, the server also takes care of secure communication with stations outside the system. As an example, the protocols used within the system may be based on the PGP set and implementation of cryptography. The server can establish an interface to PGP clients that do not use the client's software according to the invention, but use other implementations of PGP. The server may also take care of conversion between different sets of protocols. For example, the sending client may communicate with the key server and/or secure server using a first set of protocols, whereas the receiving client may communicate with the server(s) using a different second set of protocols. The server can perform the conversion by decrypting a secured message received from the sender using the protocols for the sender and the private key of server for those protocols, and re-encrypting it using the protocols of the receiver and the public key of the receiver for the receiver's protocols.

It should be noted that the above-mentioned embodiments illustrate rather than limit the invention, and that those skilled in the art will be able to design many alternative embodiments without departing from the scope of the appended claims. The invention can be implemented by means of hardware comprising several distinct elements, and by means of a suitably programmed computer. The computer program product may be stored/distributed on a suitable medium, such as optical storage, but may also be distributed in other forms, such as being distributed via the Internet or wireless telecommunication systems.

## Claims

1. A method of enabling secure communication between at least one sending station (110) and at least one receiving station (120) via a communication system (100) using public key cryptography including:
in the sending station, in response to a desire to send a secure electronic communication to the receiving station, indicating such intention to a key server in the communication system;
in the key server verifying whether a public key is available for the receiving station or a user of the receiving station, hereinafter referred to as "receiver" (300); and on a negative outcome of the verification, indicating to the receiver an intention to send a secured communication to the receiver (330),
**characterized in that** the key server, on a negative outcome of the verification, enables the receiving station to obtain software that enables the receiver to create a private/public key pair for the receiver and to make the public key of the receiver available to the key server; and
if the public key was already available to the key server (310) or in response to the public key having been made available by the receiver, using the public key for the receiver to secure the electronic communication; and making the secured communication available to the receiver through the communication system.

2. A method as claimed in claim 1, including providing a public key of a secure server from the key server to the sending station, using the public key of the secure server to secure the electronic communication in the sending station, sending the secured communication via the communication system to the secure server.

3. A method as claimed in claim 2, including if no public key is available for the receiver, temporary storing the communication in the secure server and indicating to the receiver that a secured communication has been stored in the secure server for retrieval by the receiver.

4. A method as claimed in claim in claim 2 or 3, including if the public key was already available to the key server or in response to the public key having been made available by the receiver, using the public key of the receiver to re-secure the received secure communication in the secure server and sending the re-secured communication to the receiver through the communication system.

5. A method as claimed in claim 1, including in response to a desire of the sending station to send an authenticated electronic communication to the receiving station:
making a version of the electronic communication authenticated with a private key available to the receiver via the communication system;
indicating to the receiver that a public key corresponding to the private key used for authenticating the communication is available in a key server in the communication system and enabling the receiving station to obtain software that enables the receiver to obtain the public key.

6. A method as claimed in claim 5, including using a private key of the sending station or user of the sending station, hereinafter referred to as "sender", to authenticate the electronic communication in the sending station.

7. A method as claimed in claim 6, including sending the authenticated communication to a secure server in the communication system, in the secure server re-authenticating the received authenticated communication using a private key of the secure server and making the re-authenticated communication available to the receiver.

8. A method as claimed in any one of the preceding claims, including in response to an intention of a sender or receiver to make a public key available to the key server verifying whether a communication identification associated with the sender or receiver is valid and only upon a positive verification accepting the public key in the key server.

9. A method as claimed in any one of the preceding claims, including in the key server verifying that the sending station and receiving station use a same release of a cryptographic protocol for securing/authenticating the communication; and on a negative outcome of the verification indicating a necessity to upgrade to the station with an oldest release.

10. A method as claimed in any one of the preceding claims, including in the key server verifying that the sending station and receiving station use a latest approved release of a cryptographic protocol for securing/authenticating the communication; and on a negative outcome of the verification indicating to the station(s) with a previous release a necessity to upgrade.

11. A method as claimed in any one of the preceding claims, including in the sending station enabling the user to indicate at least one of the following:
- all electronic communication should be secured/authenticated;
- all electronic communication to receivers businesses should be secured/authenticated;
- all electronic communication to selected receivers should be secured/authenticated;
- an individual electronic communication should be secured/authenticated.

12. A method as claimed in any one of the preceding claims, including registering that a station or a user of a station has retrieved a public key for securing/verifying a communication and causing a corresponding billing operation to be performed.

13. A method as claimed in any one of the preceding claims, wherein the communication system includes a plurality of key servers, at least one of the key servers, hereinafter referred to as "company server", being designated for keys of a predetermined group of sending/receiving stations, and at least one of the key servers, hereinafter referred to as "public server", being designated for keys not covered by the company server.

14. A system for secure communication, including at least one sending station (110), at least one receiving station (120) and a key server (170) operable to communicate via a communication system, (100) using public key cryptography, wherein:
the sending station is operable to indicate to the key server an intention to send a secure electronic communication to the receiving station via the communication system;
the key server is operable to verify whether a public key is available for the receiving station or a user of the receiving station, hereinafter referred to as "receiver"; and on a negative outcome of the verification, indicate to the receiver an intention to send a secured communication to the receiver,
**characterized in that** the key server is operable to, on a negative outcome of the verification, enable the receiving station to obtain software that enables the receiver to create a private/public key pair for the receiver and to make the public key of the receiver available to the key server; and
the system is operable to, if the public key was already available to the key server or in response to the public key having been made available by the receiver, use the public key for the receiver to secure the electronic communication; and make the secured communication available to the receiver via the communication system.

## Patentansprüche

1. Verfahren dass eine gesicherte Kommunikation ermöglicht zwischen mindestens einer Sendestation (110) und mindestens einer Empfangsstation (120) über ein Kommunikationssystem (100), unter Benutzung einer Public-Key-Kryptographie die beinhaltet:
dass in der Sendestation, als Reaktion auf den Wunsch eine gesicherte elektronische Kommunikation an die Empfangsstation zu schicken, diese Absicht einem Key-Server des Kommunikationssystem mitgeteilt wird;
dass in den Key-Server verifiziert wird ob ein Public-Key zur Verfügung steht für die Empfangsstation, oder für einen Benutzer der Empfangsstation, hiernach "Empfänger" (300) genannt und dass, im Falle eines negativen Ergebnisses der Verifikation, dem Empfänger eine Mitteilung gemacht wird von der Absicht dem Empfänger eine gesicherte Kommunikation (330) zu schicken,
**dadurch gekennzeichnet, dass** der Key-Server, im Falle eines negativen Ergebnisses der Verifikation, es der Empfangsstation ermöglicht Software zu erhalten, womit der Empfänger für den Empfänger ein Public-/Private-Key-Paar herstellen kann und den Public-Key des Empfängers zur Verfügung des Key-Servers stellen kann; und
im Falle der Public-Key schon zur Verfügung des Key-Servers (310) steht, oder als Reaktion auf das zur Verfügung stellen des Public-Keys durch den Empfänger, dass der Public-Key des Empfängers benutzt wird um die elektronische Kommunikation zu sichern und dass die gesicherte Kommunikation dem Empfänger zur Verfügung gestellt wird über das Kommunikationssystem.

2. Ein Verfahren gemäss dem Anspruch 1 dass beinhaltet, dass ein Public-Key eines gesicherten Servers vom Key-Server an die Sendestation gelieferd wird, die den Public-Key des gesicherten Servers benutzt um die elektronische Kommunikation in der Sendestation zu sichern und dass die gesicherte Kommunikation zum gesicherten Server geschickt wird über das Kommunikationssystem.

3. Ein Verfahren gemäss dem Anspruch 2 dass beinhaltet, dass, im Falle ein Public-Key nicht zur Verfügung des Empfängers steht, die Kommunikation vorläufig im gesicherten Server gespeichert wird und dass dem Empfänger mitgeteilt wird dass eine gesicherte Kommunikation in dem gesicherten Server gespeichert ist um von dem Empfänger abgeholt zu werden.

4. Ein Verfahren gemäss den Ansprüchen 2 oder 3 dass beinhaltet, dass, im Falle der Public-Key schon zur Verfügung des Key-Servers steht, oder als Reaktion auf das zur Verfügung stellen des Public-Keys durch den Empfänger, der Public-Key des Empfängers benutzt wird um die in den gesicherten Server erhaltene, gesicherte Kommunikation nochmals zu sichern und dass die nochmals gesicherte Kommunikation an den Empfänger geschickt wird über das Kommunikationssystem.

5. Ein Verfahren gemäss dem Anspruch 1 dass beinhaltet, dass, als Reaktion auf den Wunsch der Sendestation eine authentifizierte elektronische Kommunikation an die Empfangsstation zu schicken:
eine Version der mit einem Private-Key authentifizierte, elektronische Kommunikation dem Empfänger zur Verfügung gestellt wird über das Kommunikationssystem;
dem Empfänger mitgeteilt wird dass ein Public-Key, der dem Private-Key der zur Authentifikation der Kommunikation benutzt wurde entspricht, zur Verfügung steht in einem Key-Server des Kommunikationssystems und dass es der Empfangsstation ermöglicht wird Software zu erhalten, die es dem Empfänger ermöglicht den Public-Key zu erhalten.

6. Ein Verfahren gemäss dem Anspruch 5 dass beinhaltet, dass ein Private-Key der Sendestation, oder des Benutzers der Sendestation, hiernach "Sender" genannt, benutzt wird zur Authentifikation der elektronischen Kommunikation in der Sendestation.

7. Ein Verfahren gemäss dem Anspruch 6 dass beinhaltet, dass die authentifizierte Kommunikation zu einem gesicherten Server im Kommunikationssystem geschickt wird, das die, in den gesicherten Server erhaltene, authentifizierte Kommunikation, unter Benutzung eines Private-Keys des gesicherten Servers, nochmals authentifiziert wird und dass die nochmals authentifizierte Kommunikation dem Empfänger zur Verfügung gestellt wird.

8. Ein Verfahren gemäss einem der vorhergehenden Ansprüche dass beinhaltet, dass, als Reaktion auf die Absicht eines Senders oder eines Empfängers ein Public-Key zur Verfügung des Key-Servers zu stellen, verifiziert wird ob eine mit dem Sender oder dem Empfänger assoziierte Kommunikations Identifikation gültig ist und dass, nur wenn die Verifikation positif ist, der Public-Key von dem Key-Server akzeptiert wird.

9. Ein Verfahren gemäss einem der vorhergehenden Ansprüche dass beinhaltet, dass im Key-Server verifiziert wird dass die Sendestation und die Empfangsstation eine gleiche Version eines kryptographischen Protokolls benutzen um die Kommunikation zu sichern/authentifizieren und dass, im Falle eines negativen Ergebnisses der Verifikation, der Station mit einer älteren Version die Notwendigkeit mitgeteilt wird ihre Version zu aktualisieren.

10. Ein Verfahren gemäss einem der vorhergehenden Ansprüche dass beinhaltet, dass im Key-Server verifiziert wird dass die Sendestation und die Empfangsstation die neueste zugelassene Version eines kryptographischen Protokolls benutzen um die Kommunikation zu sichern/authentifizieren und dass, im Falle eines negativen Ergebnisses der Verifikation, der Station oder die Stationen mit einer vorhergehenden Version die Notwendigkeit mitgeteilt wird ihre Version zu aktualisieren.

11. Ein Verfahren gemäss einem der vorhergehenden Ansprüche dass beinhaltet, dass es dem Benutzer in der Sendestation ermöglicht wird mindestens eine der folgenden Mitteilungen zu machen:
- alle elektronische Kommunikationen sollen gesichert/authentifiziert werden;
- alle elektronische Kommunikationen für kommerzielle Empfänger sollen gesichert/authentifiziert werden;
- alle elektronische Kommunikationen für selektierte Empfänger sollen gesichert/authentifiziert werden;
- eine individuelle elektronische Kommunikation soll gesichert/authentifiziert werden.

12. Ein Verfahren gemäss einem der vorhergehenden Ansprüche dass beinhaltet, dass registriert wird dass eine Station oder ein Benutzer einer Station einen Public-Key abgeholt hat um eine Kommunikation zu sichern/authentifizieren und dass dafür gesorgt wird dass eine entsprechende Rechnung ausgestellt wird.

13. Ein Verfahren gemäss einem der vorhergehenden Ansprüche, wobei das Kommunikationssystem eine Vielzahl von Key-Servers enthält, wobei mindestens einer der benannten Key-Servers -hiernach "Firmenserver" genannt- bestimmt ist für die Schlüssel einer vorausbestimmte Gruppe von Sende/Empfangsstationen, und mindestens einer der benannten Key-Servers - hiernach "Public-Server" genannt- bestimmt ist für die Schlüssel die nicht in den Bereich des Firmenservers fallen.

14. Ein gesichertes Kommunikationssystem, dass mindestens eine Sendestation (110), mindestens eine Empfangsstation (120), als auch ein Key-Server (170) enthält, welches betätigt werden kann um über ein Kommunikationssystem (100) zu kommunizieren unter Benutzung einer Public-Key-Kryptographie, wobei:
die Sendestation betätigt werden kann um dem Key-Server eine Mitteilung zu machen von der Absicht der Empfangsstation über das Kommunikationssystem eine elektronische gesicherte Kommunikation zu schicken;
der Key-Server betätigt werden kann um zu verifizieren ob ein Public-Key zur Verfügung steht für die Empfangsstation, oder für einen Benutzer der Empfangsstation, hiernach <Empfänger> genannt und um, im Falle eines negativen Ergebnisses der Verifikation, dem Empfänger eine Mitteilung zu machen von der Absicht dem Empfänger eine gesicherte Kommunikation zu schicken,
**dadurch gekennzeichnet, dass** der Key-Server, im Falle eines negativen Ergebnisses der Verifikation, betätigt werden kann um es der Empfangsstation zu ermöglichen Software zu erhalten, womit der Empfänger für den Empfänger ein Public-/Private-Key-Paar herstellen kann und den Public-Key des Empfängers zur Verfügung des Key-Servers stellen kann; und
das System kann betätigt werden um, im Falle der Public-Key schon zur Verfügung des Key-Servers steht, oder als Reaktion auf das zur Verfügung stellen des Public-Keys durch den Empfänger, den Public-Key des Empfängers zu benutzten um die elektronische Kommunikation zu sichern und um die gesicherte Kommunikation dem Empfänger zur Verfügung zu stellen über das Kommunikationssystem.

## Revendications

1. Procédé permettant une communication protégée entre au moins une station d'envoi (110) et au moins une station de réception (120), au travers d'un système de communication (100), en utilisant une cryptographie par clef publique comprenant:
que dans la station d'envoi, en réaction au désire d'envoyer une communication électronique protégée à la station de réception, ladite intention est indiquée à un serveur de clef du système de communication;
que dans le serveur de clef une vérification est effectuée afin de savoir si une clef publique est disponible pour la station de réception, ou pour un utilisateur de la station de réception, ci-après nommé "destinataire" (300), et en cas d'un résultat négatif de la vérification, qu'une intention d'envoyer une communication protégée (330) au destinataire est indiquée au destinataire, **caractérisé en ce que** le serveur de clef, en cas d'un résultat négatif de la vérification, met la station de réception en état de recevoir un logiciel, permettant au destinataire de créer une paire de clefs publique/sécrète pour le destinataire et de mettre la clef publique du destinataire à la disposition du serveur de clef; et
si la clef publique était déjà disponible au serveur de clef (310), ou en réaction au fait de la clef ayant été rendue disponible par le destinataire, que la clef publique du destinataire est utilisée afin de protéger la communication électronique et que la communication protégée est mise à la disposition du destinataire au travers du système de communication.

2. Un procédé selon la revendication 1, comprenant la mise à disposition d'une clef publique d'un serveur protégé par le serveur de clef à la station d'envoi, qui utilisera la clef publique du serveur protégé pour protéger la communication électronique dans la station d'envoi et enverra la communication protégée au serveur protégé au travers du système de communication.

3. Un procédé selon la revendication 2, comprenant que, si une clef publique n'est pas disponible au destinataire, la communication est temporairement mémorisée dans le serveur protégé et que le destinataire est prévenu qu'une communication protégée a été mise en mémoire du serveur protégé afin d'être prélevée par le destinataire.

4. Un procédé selon la revendication 2 ou 3, comprenant, si la clef publique était déjà disponible au serveur de clef, ou en réaction au fait de la clef ayant été rendue disponible par le destinataire, que la clef publique du destinataire est utilisée afin de protéger à nouveau la communication protégée reçue dans le serveur protégé et que la communication protégée à nouveau est envoyée au destinataire au travers du système de communication.

5. Un procédé selon la revendication 1, comprenant, en réaction au désire de la station d'envoi d'envoyer une communication électronique authentifiée à la station de réception:
qu'une version de la communication électronique authentifiée avec une clef sécrète est créée, qui sera disponible au destinataire au travers du système de communication;
que le destinataire est prévenu qu'une clef publique correspondant à la clef sécrète utilisée pour authentifier la communication, est disponible dans un serveur de clef dans le système de communication et que la station de réception est mise en état de recevoir un logiciel, permettant au destinataire de recevoir la clef publique.

6. Un procédé selon la revendication 5, comprenant l'utilisation d'une clef sécrète de la station d'envoi, ou de l'utilisateur de la station d'envoi, ci-après nommé « envoyeur », afin d'authentifier la communication électronique dans la station d'envoi.

7. Un procédé selon la revendication 6, comprenant l'envoi de la communication authentifiée à un serveur protégé dans le système de communication, l'authentification à nouveau de la communication authentifiée reçue dans le serveur protégé en utilisant une clef sécrète du serveur protégé, et la mise à la disposition du destinataire de la communication authentifiée à nouveau.

8. Un procédé selon une des revendications précédentes, comprenant que, en réaction à l'intention d'un envoyeur ou d'un destinataire de mettre une clef publique à la disposition du serveur de clef, une vérification est effectuée afin de savoir si une identification de communication associée à l'envoyeur ou au destinataire est valable et que, seulement si la vérification est positive, la clef publique est acceptée dans le serveur de clef.

9. Un procédé selon une des revendications précédentes, comprenant, la vérification dans le serveur de clef, que la station d'envoi et la station de réception utilisent la même version d'un protocole cryptographique pour protéger/authentifier la communication et, en cas d'un résultat négatif de la vérification, l'indication à la station avec une version plus ancienne de la nécessité de la mettre à jour.

10. Un procédé selon une des revendications précédentes, comprenant, la vérification dans le serveur de clef, que la station d'envoi et la station de réception utilisent la version approuvée la plus récente d'un protocole cryptographique pour protéger /authentifier la communication et, en cas d'un résultat négatif de la vérification, l'indication à la station ou aux stations avec une version précédente de la nécessité de la mettre à jour.

11. Un procédé selon une des revendications précédentes, comprenant, dans la station d'envoi la possibilité pour l'utilisateur d'indiquer au moins une des choses suivantes:
- toutes les communications électroniques doivent être protégées/authentifiées ;
- toutes les communications électroniques pour des destinataires commerciaux doivent être protégées/authentifiées ;
- toutes les communications électroniques pour des destinataires sélectionnées doivent être protégées/authentifiées ;
- une communication électronique individuelle doit être protégée/authentifiée.

12. Un procédé selon une des revendications précédentes, comprenant, d'enregistrer qu'une station ou un utilisateur d'une station a prélevé une clef publique pour protéger/vérifier une communication et de causer qu'une facturation correspondante est effectuée.

13. Un procédé selon une des revendications précédentes, dans lequel le système de communication comprend une pluralité de serveurs de clef, au moins un desdits serveurs de clef -ci-après nommé "serveur de société"- étant désigné pour les clefs d'un groupe prédéterminé de stations d'envoi/de réception, et au moins un desdits serveurs de clef -ci-après nommé "serveur publique"- étant désigné pour des clefs qui ne sont pas du ressort du serveur de société.

14. Un système de communication protégé, comprenant au moins une station d'envoi (110), au moins une station de réception (120), ainsi qu'un serveur de clef (170), pouvant être actionnés pour communiquer au travers d'un système de communication (100), en utilisant une cryptographie par clef publique, dans lequel:
la station d'envoi peut être actionnée pour indiquer au serveur de clef une intention d'envoyer une communication électronique protégée à la station de réception au travers du système de communication ; le serveur de clef peut être actionné pour vérifier si une clef publique est disponible pour la station de réception, ou pour un utilisateur de la station de réception, ci-après nommé "destinataire", et en cas d'un résultat négatif de la vérification, pour indiquer au destinataire une intention d'envoyer une communication protégée au destinataire,
**caractérisé en ce que** le serveur de clef peut être actionné, en cas d'un résultat négatif de la vérification, pour mettre la station de réception en état de recevoir un logiciel, permettant au destinataire de créer une paire de clefs publique/sécrète pour le destinataire et pour mettre la clef publique du destinataire à la disposition du serveur de clef; et
le système peut être actionné, si la clef publique était déjà disponible au serveur de clef, ou en réaction au fait de la clef ayant été rendue disponible par le destinataire, pour utiliser la clef publique pour le destinataire afin de protéger la communication électronique et pour mettre la communication protégée à la disposition du destinataire au travers du système de communication.
